# EUROPEAN PATENT APPLICATION

(11) **EP 2 180 316 A1**
(43) Date of publication of application: **28.04.2010**
(21) Application number: 08778127.4
(22) Date of filing: 08.07.2008
(51) Int. Cl.: G01N 27/447

(54) **PRECAST GEL FOR ELECTROPHORESIS, METHOD FOR PRODUCTION THEREOF, AND USE THEREOF**

(30) Priority: 17.08.2007 WO PCT/JP2007/066403
(71) Applicant: Hymo Corporation, Tokyo 141-0031 (JP)
(72) Inventor: SUZUKI, Kazuhisa, Tokyo 141-0031 (JP); SUZUKI, Mika, Tokyo 141-0031 (JP); MINEGISHI, Yukiko, Tokyo 1410031 (JP)
(74) Representative: Schwahn, Hartmut
(86) International application number: PCT/JP2008/062656
(87) International publication number: WO 2009/025135

(57) **Abstract**

This invention relates to a precast gel for electrophoresis comprising a support filled with an aqueous gel prepared by polymerizing an aqueous solution comprising a radically polymerizable monomer, a crosslinkable monomer, a buffer, a redox initiator comprising an oxidizer/reducer, and a photosensitizer and having a pH level of 6.0 to 7.5 via light application. The slab gel for electrophoresis of the present invention can produce a precast gel for electrophoresis within a shorter period of time and in an easier manner than is possible with conventional techniques. Accordingly, the present invention enables production of a high-quality precast gel for electrophoresis in terms of productivity, cost, and quality, and the industrial applicability thereof is remarkable.

## Description

### Technical Field

The present invention relates to a slab gel for electrophoresis used for separating a protein, a nucleic acid, or the like via electrophoresis for the purpose of biochemical/pharmaceutical analysis, a method for producing the same, and a method of electrophoresis using the same.

### Background Art

The term "electrophoresis" refers to a phenomenon whereby charged particles or molecules migrate in an electric field. A method utilizing such phenomenon for separating a protein or nucleic acid in the field of molecular biology is generally referred to as "electrophoresis." Electrophoresis is extensively employed as a fundamental research means in many fields, such as medicine, fisheries sciences, veterinary medicine, and pharmaceutical sciences, in addition to the field of molecular biology. In particular, a process of the decoding of the genome followed by proteome analysis has been actively performed in recent years. Thus, electrophoresis is considered to be an indispensable technique for protein function analysis, drug discovery utilizing the same, and other purposes.

When electrophoresis is performed, in general, a medium containing a buffer is used. Examples of known medium include agarose, agar, a cellulose acetate membrane, and polyacrylamide gel, and a medium is adequately selected in accordance with its application.

Since polyacrylamide gel is an artificially synthesized material, in particular, gels having different separation properties can be easily prepared by changing compositions. Electrophoresis techniques involving the use of polyacrylamide gel are commonly employed.

In view of improvement in research efficiency and handling of highly toxic reagents, such as acrylamide, precast polyacrylamide gels that have been filled with gels of various separation properties in advance have been prevalent in recent years.

In the past, polyacrylamide gels for electrophoresis were produced by users in accordance with the prevalent methods proposed by Ornstein (L. Ornstein, Ann. N.Y. Acad. Sci., 121, 321-349, 1964), Davis (B. J. Davis, Ann. N.Y. Acad. Sci., 121, 404-427, 1964), and Laemmli (U. K. Laemmli, Nature 227, 680, 1970) for biochemical/pharmaceutical analysis of proteins. In particular, a method of Laemmli that can readily allow deduction of protein molecular weight with the addition of sodium dodecyl sulfate (hereafter abbreviated as "SDS") to a gel or a buffer for electrophoresis is extensively used. The Laemmli method involves the use of, as a gel buffer, a partially neutralized product of tris(hydroxymethyl)aminomethane (hereafter abbreviated as "Tris") with hydrochloric acid, and, as an electrophoresis buffer, Tris or glycine salt (i.e., Laemmli Electrophoresis Buffer). The pH level of the gel buffer used in this method is adjusted to 8.8 by subjecting about 10% to 20% by mole of Tris to partial neutralization with hydrochloric acid (i.e., Laemmli Gel Buffer). At the pH level of the Laemmli Gel Buffer, however, an amide group undergoes hydrolysis with the elapse of time. Hydrolysis can also proceed at low temperatures, and polyacrylamide gel consequently contains an anion group in one part thereof. As a result, a protein migration distance is reduced, and a separation image becomes unclear. Accordingly, gel cannot be stored for a long period of time.

Precast gels that supply gels that have been mass-produced in advance are required to supply gels during a limited storage period. Thus, precast gels are desired to have good storage stability.

As disclosed in JP Patent Nos. 2588059, 2597145, 3076200, 3942001, and others, the applicant of the present invention has conducted concentrated studies regarding improvement in quality of polyacrylamide gel for electrophoresis, a method for producing the same, and a method for using the same, in an attempt of overcoming the drawbacks of conventional techniques. With the application of the aforementioned inventions, the applicant succeeded in improving quality and productivity of precast polyacrylamide gels and contributed to improvement of productivity of high-quality precast gels.

The forms of polyacrylamide gels for electrophoresis are a gel formed in a glass tube or a gel formed between two glass plates. The latter gel is referred to as a slab gel.

In general, polyacrylamide slab gel involves the use of a glass plate as a support. Precast gels involving the use of a plastic plate other than a glass plate are also commercially available in Japan as well as in Western countries.

In the past, a polyacrylamide slab gel was prepared by using a high-concentration acrylamide solution to which a redox catalyst has been added to fill the space between two glass plates that sandwich a spacer of a given thickness to form a gel referred to as a separation layer, using a low-concentration acrylamide solution to which a redox catalyst has also been added to fill the same, and inserting a comb having a shape of interest to simultaneously form a gel referred to as a concentration layer and a sample inlet in the separation gel.

In order to prevent an unreacted acrylamide monomer from remaining in the gel, an acrylamide solution may be deaerated and a redox catalyst may then be added to form a gel.

Due to high reactivity of acrylamide, however, gel formation rapidly proceeds upon mixing of acrylamide with a catalyst under deaerated conditions. In order to realize mass production, a method for maintaining an acrylamide solution at low temperature and a method for successively proceeding with the reaction while adjusting catalyst concentration have been proposed (JP Patent Publication (kokai) No. H05-203 621 A (1993)).

According to a method for producing a gel by coating a film with an acrylamide solution, productivity of precast gels can be improved via photopolymerization. In the case of a production method that uses coating, however, it is difficult to form two layers (i.e., a concentration layer and a separation layer) and to produce a concentration-gradient polyacrylamide gel of high quality. Thus, a method involving varying gel thickness and a method involving increasing the viscosity of an acrylamide solution have been proposed (JP Patent Publication (kokai) Nos. H06-52254 A (1994) and H06-60885 A (1994)). Also, special equipment such as a coater is necessary in order to prepare a gel having homogeneous membrane thickness.

In order to produce a precast polyacrylamide gel that is optimal for electrophoresis, accordingly, various innovative ideas are necessary. From the viewpoint of productivity and quality assurance, it previously has been difficult to provide a high-quality precast gel by conventional techniques.

### Disclosure of the Invention

The present inventors have conducted concentrated studies. As a result, they completed the invention described below. Also, the present invention concerns a method for producing a slab gel for electrophoresis and a method for using the same.

Specifically, the present invention concerns the following.
1) A precast gel for electrophoresis comprising a support filled with an aqueous gel, which is prepared by polymerizing an aqueous solution comprising a radically polymerizable monomer, a crosslinkable monomer, a buffer, a redox initiator comprising an oxidizer/reducer, and a photosensitizer and having a pH level of 6.0 to 7.5 via light application.
2) The precast gel for electrophoresis according to 1) above, wherein the radically polymerizable monomer is acrylamide.
3) The precast gel for electrophoresis according to 1) or 2) above, wherein the reducer is tetramethylethylenediamine.
4) The precast gel for electrophoresis according to any of 1) to 3) above, wherein the buffer comprises tris(hydroxymethyl)aminomethane and hydrochloric acid.
5) The precast gel for electrophoresis according to any of 1) to 3) above, wherein the buffer comprises tris(hydroxymethyl)aminomethane, hydrochloric acid, and an amphoteric electrolyte.
6) The precast gel for electrophoresis according to any of 1) to 3) above, wherein the buffer contains glycine and an amphoteric electrolyte other than glycine.
7) The precast gel for electrophoresis according to any of 1) to 3) above, wherein the buffer is a partially neutralized product of tris(hydroxymethyl)aminomethane with at least one acid selected from among boric acid, acetic acid, and glycine.
8) The precast gel for electrophoresis according to any of 1) to 3) above, wherein the buffer comprises bis-tris[bis-(2-hydroxyethyl)imino-tris(hydroxymethyl)methane] and hydrochloric acid.
9) The precast gel for electrophoresis according to any of 1) to 8) above, wherein the pH level of the aqueous solution is between 6.0 and 7.0.
10) The precast gel for electrophoresis according to any of 1) to 9) above, wherein the support is a package prepared by inserting spacers each of a given thickness into the space between two glass plates or between a glass plate and a plastic plate at two edge portions of such plates.
11) The precast gel for electrophoresis according to any of 1) to 9) above, wherein the support is a package prepared by inserting spacers each of a given thickness into the space between two plastic sheets having a thickness of 0.1 mm to 1.0 mm at two or three edge portions of such sheets.
12) The precast gel for electrophoresis according to any of 1) to 9) above, wherein the support is a plastic package formed via injection molding.
13) A method for producing a precast gel for electrophoresis comprising filling a support with an aqueous solution comprising a radically polymerizable monomer, a crosslinkable monomer, a buffer, a redox polymerization initiator comprising an oxidizer/reducer, and a photosensitizer and having a pH level of 6.0 to 7.5 and polymerizing the aqueous solution via light application.
14) The method for producing a precast gel for electrophoresis according to 13) above, wherein the aqueous solution is cured within 5 minutes via light application.
15) A method for using of a slab gel for electrophoresis for separation and analysis of a protein or nucleic acid, wherein the slab gel for electrophoresis comprises a support filled with an aqueous gel prepared by polymerizing an aqueous solution comprising a radically polymerizable monomer, a crosslinkable monomer, a buffer, a redox polymerization initiator, and a photosensitizer and having a pH level of 6.0 to 7.5 via light application with the use of a buffer for electrophoresis containing tris(hydroxymethyl)aminomethane and glycine.
16)A method for using of a slab gel for electrophoresis according to 15) above, wherein the buffer for electrophoresis contains dodecyl sulfate.

This description includes part or all of the contents as disclosed in the description and/or drawings of PCT Application No. PCT/JP2007/066403, which is a priority document of the present application.

### Brief Description of the Drawings

Fig. 1 is an exploded perspective view of the plastic support according to the present invention.
Fig. 2 is a frontal perspective view of an assembled precast gel package for electrophoresis shown in Fig. 1, which shows a slab gel package for electrophoresis prepared by adhering a spacer to two plastic sheets, with three edges thereof being fixed.
Fig. 3 is a rear perspective view of an assembled precast gel package for electrophoresis shown in Fig. 1, which shows a slab gel package for electrophoresis prepared by adhering a spacer to two plastic sheets, with three edges thereof being fixed.
Fig. 4 shows the results of electrophoresis that is carried out in accordance with the technique of the present invention involving the use of a glass plate as a support.
Fig. 5 shows the results of electrophoresis that is carried out in accordance with the technique of the present invention involving the use of a PET package as a support.

### Description of numerical references

1. Front plastic sheet
2. Spacer
3. Rear plastic sheet
4. Conducting slit
5. Seal

### Best Modes for Carrying out the Invention

The precast gel for electrophoresis of the present invention comprises a support filled with an aqueous gel prepared by polymerizing an aqueous solution comprising a radically polymerizable monomer, a crosslinkable monomer, a buffer, a redox polymerization initiator comprising an oxidizer/reducer, and a photosensitizer and having a pH level of 6.0 to 7.5 via light application.

The term "radically polymerizable monomer" refers to a nonionic water-soluble vinyl monomer. Examples thereof include, but are not particularly limited to, (meth)acrylamide, N-methyl (meth)acrylamide, N-methylol (meth)acrylamide, N-ethyl (meth)acrylamide, N-isopropyl (meth)acrylamide, N,N-dimethyl (meth)acrylamide, N,N-diethyl (meth)acrylamide, hydroxymethyl (meth)acrylamide, hydroxyethyl (meth)acrylamide, hydroxyethyl (meth)acrylate, hydroxypropyl (meth)acrylamide, diethylene glycol mono(meth)acrylate, N-vinyl carbazole, N-vinyl succinimide, N-vinyl formamide, N-vinyl acetamide, N-vinyl-2-pyrrolidone, and diacetone acrylamide.

The radically polymerizable monomer is particularly preferably acrylamide.

The term "crosslinkable monomer" refers to a radically polymerizable monomer having two or more vinyl groups. Examples include methylene bis acrylamide, (poly)ethylene glycol di(meth)acrylate, piperazine diacrylamide, N,N-diallyl tartramide, and 1,3,5-triacryloyl hexahydro-s-triazine.

Copolymerization of the crosslinkable monomer in an amount of 5% by weight or lower relative to the radically polymerizable monomer is suitable for separating a protein or nucleic acid via electrophoresis.

The photosensitizer is preferably riboflavine or sodium riboflavine phosphate.

The redox polymerization initiator comprising an oxidizer/reducer is a radical polymerization initiator comprising a peroxide or peroxodisulfate in combination with a reducer. Examples of peroxide include ammonium peroxodisulfate, potassium peroxodisulfate, and hydrogen peroxide. Examples of a reducer include trimethylamine and tetramethylethylenediamine, with tetramethylethylenediamine being particularly preferable. Examples of combinations of such oxidizer/reducer include ammonium peroxodisulfate/trimethylamine or tetramethylethylenediamine and potassium peroxodisulfate/trimethylamine or tetramethylethylenediamine. A particularly preferable combination is ammonium peroxodisulfate/tetramethylethylenediamine.

The buffer may be a buffer comprising tris(hydroxymethyl)aminomethane and hydrochloric acid, a buffer comprising tris(hydroxymethyl)aminomethane, hydrochloric acid, and an amphoteric electrolyte, a buffer comprising tris(hydroxymethyl)aminomethane, hydrochloric acid, glycine, and an amphoteric electrolyte other than glycine, a buffer comprising tris(hydroxymethyl)aminomethane and boric acid, a buffer comprising tris(hydroxymethyl)aminomethane and acetic acid, a buffer comprising tris(hydroxymethyl)aminomethane and glycine, or a buffer comprising Bis-Tris and hydrochloric acid.

A particularly preferable buffer comprises tris(hydroxymethyl)aminomethane, hydrochloric acid, glycine, and an amphoteric electrolyte other than glycine, and it has a pH level of 6.0 to 7.5.

The aforementioned aqueous solution comprising a radically polymerizable monomer, a crosslinkable monomer, a buffer, a redox polymerization initiator comprising an oxidizer/reducer, and a photosensitizer can be mixed so as to adjust its concentration at an arbitrary level in accordance with a purpose of use, provided that a pH level of the aqueous solution is between 6.0 and 7.5 and, particularly preferably a pH level of between 6.0 and 7.0. If the pH level is lower than 6.0, a protein or nucleic acid cannot be clearly separated via electrophoresis, and such pH level is thus not suitable for the purpose of use. If the pH level is higher than 7.5, hydrolysis of the polymer proceeds, and long-term stability of a precast gel cannot be maintained.

The precast gel for electrophoresis according to the present invention is prepared by filling a support with an aqueous solution comprising a radically polymerizable monomer, a crosslinkable monomer, a buffer, a redox polymerization initiator comprising an oxidizer/reducer, and a photosensitizer and having a pH level of 6.0 to 7.5, and particularly preferably a pH level of 6.0 to 7.0, and irradiating the support with a light to polymerize the aqueous solution.

By polymerizing the radically polymerizable monomer using a photosensitizer that generates radicals via light application in combination with a redox catalyst, in particular, polymerization speed can be more adequately adjusted, compared with a common method in which reaction is carried out with the use of a radical polymerization initiator alone.

The photosensitizer and the redox catalyst are used in amounts of 0.0005% to 5% relative to the radically polymerizable monomer. In such a case, a water-soluble photosensitizer that is adequate for the light source to be used can be used as the photosensitizer. When ultraviolet rays are used, for example, riboflavine can be used.

A general light source can be used for light application.

Temperature can be selected in accordance with a polymerization speed. In general, temperature is preferably between 5°C and 50°C.

In addition to a radically polymerizable monomer, a crosslinkable monomer, and a buffer, the aqueous solution may comprise agarose, a water-soluble polymer, such as polyacrylamide, polyethylene glycol, polyvinyl alcohol, polyvinyl pyrrolidone, polymethyl vinyl ether, or polyhydroxymethyl acrylamide, glycerine, or the like, so as to improve the strength of a polymer or to improve adhesion between a package and a polymer.

The aqueous solution may comprise sodium dodecyl sulfate, according to need.

The precast gel for electrophoresis according to the present invention is a precast slab gel for electrophoresis comprising a support filled with an aqueous gel.

The support can be formed by inserting a spacer having a thickness of 1 mm and silicon packing, so as to prevent a monomer solution from leaking, into a space between a glass or plastic plate and another glass or plastic plate of the same dimensions and having in its upper part a recessed slit.

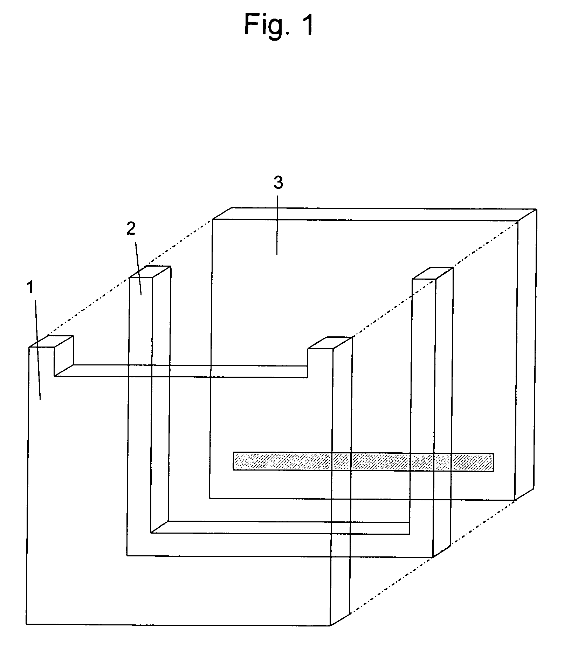

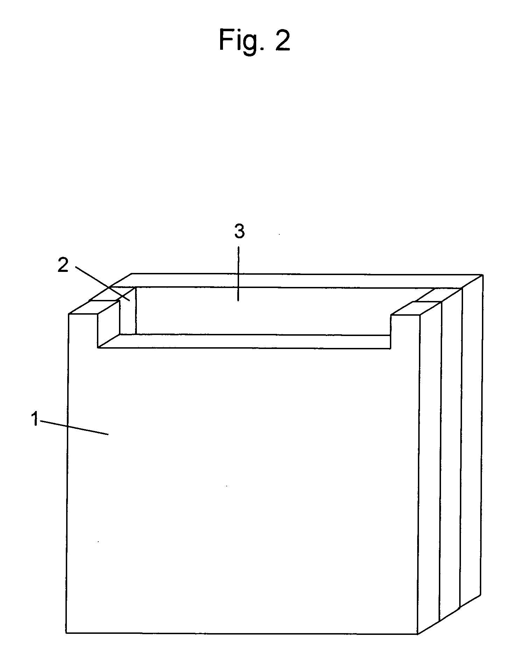

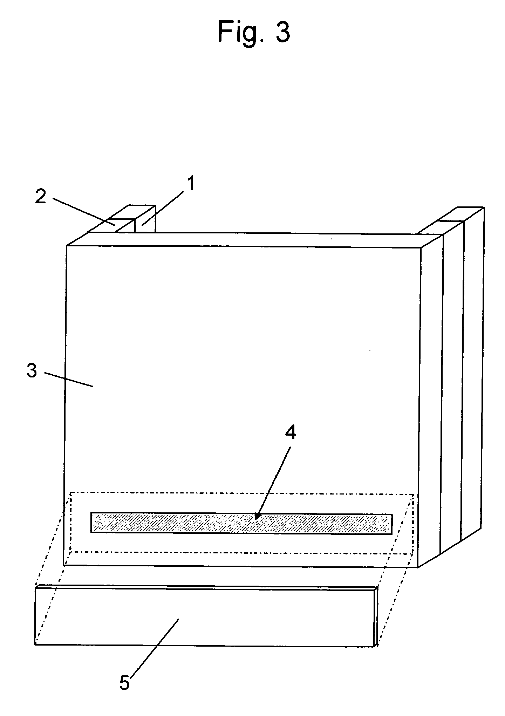

The support is a package formed by inserting a sharply cornered "U"-like-shaped spacer having a thickness of 1 mm between two plastic sheets as shown in Fig. 1 and in Fig. 2. Plastic sheet thickness is preferably between 0.1 mm and 1.0 mm. In order to conduct electricity by bringing a polymerization product into contact with a buffer for electrophoresis at the positive electrode, provision of a slit as shown in Fig. 3 is necessary. The slit may be sealed with tape or the like at the time of production, and the tape may be peeled off at the time of use, so that such slit can function as a conducting slit.

The support may be a plastic package formed via injection molding.

Examples of materials used for the plastic sheet or plastic package include, but are not limited to, polyvinyl chloride, polyvinylidene chloride, polyethylene terephthalate, polyethylene naphthalate, styrene-acrylnitrile resin, acrylic resin, and polycarbonate. Two plastic sheets made of the same material may be used to form a package, or plastic sheets of different materials may be used in combination.

The plastic sheet preferably has an oxygen transmission coefficient of 100 cm³/m² · day · atm or lower. If an oxygen transmission coefficient is 100 cm³/m² · day · atm or higher, polymerization may be inhibited by oxygen that is contained in the package at the time of polymerization, and a polymerization product suitable for electrophoresis may not be obtained.

The plastic sheet preferably has a flexural modulus of 7,000 kg/cm² or higher. A flexural modulus is an indicator representing the rigidity of a plastic, and a plastic having a flexural modulus of 7,000 kg/cm² or higher is generally referred to as a rigid plastic. At a flexural modulus of 7,000 kg/cm² or higher, a package can be prevented from being damaged or deformed by impact at the time of handling or transportation.

The precast gel for electrophoresis according to the present invention is capable of separating a protein using a buffer for electrophoresis, which is an aqueous solution containing tris(hydroxymethyl)aminomethane and an amphoteric electrolyte. The buffer for electrophoresis may further comprise sodium dodecyl sulfate (SDS).

Further, the precast gel for electrophoresis according to the present invention is capable of separating a nucleic acid using a buffer for electrophoresis, which is an aqueous solution containing tris(hydroxymethyl)aminomethane and an amphoteric electrolyte.

Hereafter, the precast gel for electrophoresis according to the present invention, a method for producing the same, and a method for using the same are described in detail with reference to the examples, although the present invention is not limited thereto.

### Example 1

A spacer having a thickness of 1 mm and silicon packing, which is used to prevent a monomer solution from leaking, were inserted into the space between a rectangular glass plate (width: 12 cm; length 10 cm) and another glass plate of the same dimensions having in its upper part a recessed slit. Thus, glass plates were assembled to create a support. As a solution for the separation layer, a 0.1% sodium riboflavine phosphate solution, TEMED, and a 10% APS solution were added in amounts of 20 µl/ml, 0.8 µl/ml, and 6 µl/ml to a monomer solution comprising acrylamide 10% (%T), BIS 3% (%C), glycerine 8%, and a buffer at the concentration as shown in Table 1. As a solution for the concentration layer, a 0.1% sodium riboflavine phosphate solution, TEMED, and a 10% APS solution were added in amounts of 5 µl/ml, 1.2 µl/ml, and 10 µl/ml to a monomer solution comprising acrylamide 5% (%T), BIS 3% (%C), and a buffer at the concentration as shown in Table 1. The resultants were agitated. The solution for the separation layer and the solution for the concentration layer were introduced onto a plate in that order, a comb was provided thereafter, and ultraviolet rays were applied with the use of a 400 W high-pressure mercury-vapor lamp (light intensity at 365 nm: 20 mW/cm²) for 1 minute to form a gel.

**Table 1**

| | |
|---|---|
| Tris | 0.082 mol/l |
| Glycine | 0.167 mol/l |
| Serine | 0.025 mol/l |
| pH | 6.8 |

Electrophoresis was carried out using the resulting polyacrylamide slab gel for electrophoresis. A buffer for electrophoresis comprising 0.025 mol/l Tris, 0.192 mol/l glycine, and 0.1% by weight SDS was used. The buffer is known as Laemmli's formulation. Electrophoresis was carried out using the gel for electrophoresis prepared as described above.

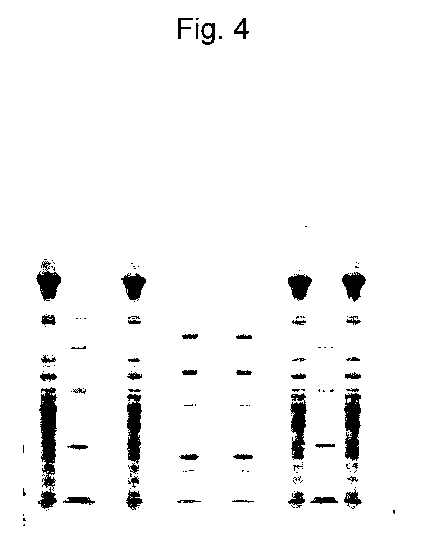

As electrophoresis samples, the Apro molecular marker (A) (APRO Science Co., Ltd.), the Precision Plus Marker (B) (BIO-RAD), and a chicken-meat extract (C) were used. Electrophoresis was carried out at 200 V of constant voltage for 50 minutes. Staining was carried out using a shaking apparatus in 0.05% CBB (Coomassie brilliant blue)-G250, 12% acetic acid, and 30% methanol solution for 45 minutes. Decoloring was carried out in 12% acetic acid and 15% methanol solution using a shaking apparatus for 90 minutes, and the resultant was soaked in pure water for 60 minutes at the end. The results after staining and decoloring are shown in Fig. 4.

As a result of electrophoresis, a protein was separated in a normal manner, and a very clear electrophoresis image was obtained. Also, all bands were seen in a line without distortions or waves. The separation capacity, clearness, and sharpness of a band were substantially equivalent to those of polyacrylamide slab gels for electrophoresis that have been commonly used. Thus, the polyacrylamide slab gel for electrophoresis produced by the present invention exhibited properties equivalent to those of polyacrylamide gels for electrophoresis that have been commonly used.

As a result of electrophoresis, a protein was normally separated, and a very clear electrophoresis image was obtained. Also, all bands were seen in a line without distortions or waves. The separation capacity, clearness, and sharpness of a band were substantially equivalent to those of polyacrylamide slab gels for electrophoresis using glass plates that have been commonly used. Thus, the polyacrylamide slab gel for electrophoresis produced by the present invention exhibited properties equivalent to those of polyacrylamide gels for electrophoresis using glass plates that have been commonly used.

### Example 2

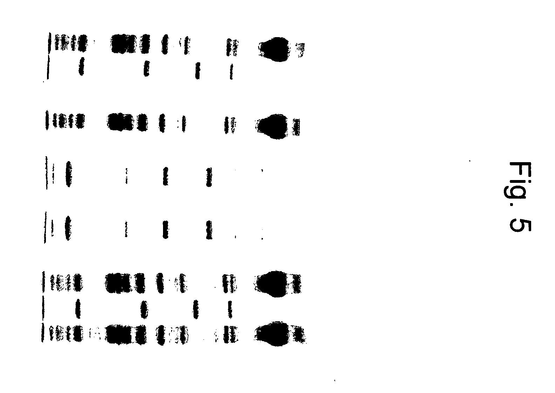

The procedure of Example 1 was performed, except that the support was replaced with a package made of polyethylene terephthalate (PET) as shown in Figs. 1 to 3. A gel was formed by applying ultraviolet rays for 1 minute as in the case of Example 1. Electrophoresis was carried out using the obtained polyacrylamide slab gel for electrophoresis and, consequently, a very clear band was attained as in the case of Example 1. The results are shown in Fig. 5.

### Example 3

The procedure of Example 1 was performed, except that glass plates of the PET package (i.e., a support) formed via injection molding was replaced with polyethylene terephthalate (PET) plates. A gel was formed by applying ultraviolet rays for 1 minute as in the case of Example 1. Electrophoresis was carried out using the obtained polyacrylamide slab gel for electrophoresis and, consequently, a very clear band was attained as in the case of Example 1.

### Comparative Example 1

The procedure of Example 1 was performed, except that the reaction was carried out in the dark without UV application. It took about 30 minutes to form a gel, and some recesses were observed in the gel in the upper portion of the plate due to a decrease in the volume caused upon polymerization. Electrophoresis was carried out using the obtained polyacrylamide slab gel for electrophoresis under the same conditions as in Example 1. As a result, a band that was somewhat unclear, compared with that of Example 1, was attained.

### Comparative Example 2

The procedure of Example 1 was performed, except that APS was not used. A gel was formed by applying ultraviolet rays for 5 minutes; however, the resulting gel had an inhomogeneous concentration layer due to insufficient polymerization. Electrophoresis was carried out using the obtained polyacrylamide slab gel for electrophoresis. As a result, an unclear band was attained.

### Comparative Example 3

The procedure of Example 1 was performed, except that the acrylamide solution was deaerated with a nitrogen gas. The gel was formed too rapidly and, thus, fill time was not sufficient.

### Comparative Example 4

The procedure of Example 2 was performed, except that the reaction was carried out in the dark without UV application. A gel appeared to be formed within about 30 minutes; however, the resulting gel had an inhomogeneous concentration layer due to insufficient polymerization. Electrophoresis was carried out using the obtained polyacrylamide slab gel for electrophoresis. As a result, an unclear band was attained.

The results are shown in Table 2.

**Table 2**

| | Plate | Sodium riboflavine phosphate | TEMED | 10% APS | UV application | Deaeration with nitrogen | Gel formation | Results of electrophoresis |
|---|---|---|---|---|---|---|---|---|
| Example 1 | Glass | Present | Present | Present | 1 min | Not performed | Good | Good |
| Example 2 | PET | Present | Present | Present | 1 min | Not performed | Good | Good |
| Example 3 | PET | Present | Present | Present | 1 min | Not performed | Good | Good |
| Comparative Example 1 | Glass | Present | Present | Present | Not performed | Not performed | Somewhat poor | Good |
| Comparative Example 2 | Glass | Present | Present | Absent | 5 min | Not performed | Poor | Unclear band |
| Comparative Example 3 | Glass | Present | Present | Present | Not performed | Performed | Poor | - |
| Comparative Example 4 | PET | Present | Present | Present | Not performed | Not performed | Poor | Unclear band |

In each of Examples 1, 2, and 3, gel formation was completed within 1 minute, and all resulting gels were sufficient as polyacrylamide gels for electrophoresis. Since gel formation is completed within 1 minute and the conditions of gel formation in a plate are good, the production method of the present invention is very effective for mass production.

As in the case of Examples I and 2, the gel obtained in Comparative Example 1 was sufficient as a polyacrylamide gel for electrophoresis, although it took about 30 minutes to form a gel. Also, the gel in the upper portion of the plate had some recesses caused by a decrease in the volume at the time of polymerization. Thus, such gel was of a low value as a precast gel.

APS was not added in Comparative Example 2. As a result, a gel appeared to be formed via UV application for 5 minutes, although the amount of remaining AAm was very large. Thus, the resulting gel was insufficient as a polyacrylamide gel for electrophoresis.

In Comparative Example 3, the monomer solution was first deaerated with nitrogen and the solution was then to be injected, so as to shorten the reaction time. As a result, gel formation was initiated before filling with the solution. At room temperature, deaeration with nitrogen resulted in initiation of polymerization, and it was difficult to use the solution for filling.

In Comparative Example 4, a PET plate was used, and the reaction was allowed to proceed in the dark without UV application. As a result, polymerization was inhibited by oxygen on the PET surface, and the gel in the concentration layer became inhomogeneous. The band attained after electrophoresis was unclear, which indicates that the resulting gel would be insufficient as a polyacrylamide gel for electrophoresis.

In the presence of sodium riboflavine phosphate, TEMED, and APS, polymerization was carried out via UV application, and gel formation was completed within 1 minute. With the use of a plastic plate, such as a PET plate, also, a polyacrylamide gel for electrophoresis having properties equivalent to those attained with the use of a glass plate was produced.

The above results demonstrate that the precast polyacrylamide gel for electrophoresis of the present invention is optimal for electrophoresis. The results also demonstrate that the present invention can provide a high-quality precast gel in terms of productivity, cost, and quality assurance.

### Industrial Applicability

The slab gel for electrophoresis of the present invention can produce a precast gel for electrophoresis within a shorter period of time and in an easier manner than is possible with conventional techniques. Accordingly, the present invention enables production of a high-quality precast gel for electrophoresis in terms of productivity, cost, and quality, and its industrial applicability is remarkable.

All publications, patents, and patent applications cited herein are incorporated herein by reference in their entirety.

## Claims

1. A precast gel for electrophoresis comprising a support filled with an aqueous gel, which is prepared by polymerizing an aqueous solution comprising a radically polymerizable monomer, a crosslinkable monomer, a buffer, a redox polymerization initiator comprising an oxidizer/reducer, and a photosensitizer and having a pH level of 6.0 to 7.5 via light application.

2. The precast gel for electrophoresis according to claim 1, wherein the radically polymerizable monomer is acrylamide.

3. The precast gel for electrophoresis according to claim 1 or 2, wherein the reducer is tetramethylethylenediamine.

4. The precast gel for electrophoresis according to any of claims 1 to 3, wherein the buffer comprises tris(hydroxymethyl)aminomethane and hydrochloric acid.

5. The precast gel for electrophoresis according to any of claims 1 to 3, wherein the buffer comprises tris(hydroxymethyl)aminomethane, hydrochloric acid, and an amphoteric electrolyte.

6. The precast gel for electrophoresis according to any of claims 1 to 3, wherein the buffer contains glycine and an amphoteric electrolyte other than glycine.

7. The precast gel for electrophoresis according to any of claims 1 to 3, wherein the buffer is a partially neutralized product of tris(hydroxymethyl)aminomethane with at least one acid selected from among boric acid, acetic acid, and glycine.

8. The precast gel for electrophoresis according to any of claims 1 to 3, wherein the buffer comprises bis-tris[bis-(2-hydroxyethyl)imino-tris(hydroxymethyl)methane] and hydrochloric acid.

9. The precast gel for electrophoresis according to any of claims 1 to 8, wherein the pH level of the aqueous solution is between 6.0 and 7.0.

10. The precast gel for electrophoresis according to any of claims 1 to 9, wherein the support is a package prepared by inserting spacers each of a given thickness into the space between two glass plates or between a glass plate and a plastic plate at two edge portions of such plates.

11. The precast gel for electrophoresis according to any of claims 1 to 9, wherein the support is a package prepared by inserting spacers each of a given thickness into the space between two plastic sheets having a thickness of 0.1 mm to 1.0 mm at two or three edge portions of such sheets.

12. The precast gel for electrophoresis according to any of claims 1 to 9, wherein the support is a plastic package formed via injection molding.

13. A method for producing a precast gel for electrophoresis comprising filling a support with an aqueous solution comprising a radically polymerizable monomer, a crosslinkable monomer, a buffer, a redox polymerization initiator comprising an oxidizer/reducer, and a photosensitizer and having a pH level of 6.0 to 7.5 and polymerizing the aqueous solution via light application.

14. The method for producing a precast gel for electrophoresis according to claim 13, wherein the aqueous solution is cured within 5 minutes via light application.

15. A method for using of a slab gel for electrophoresis for separation and analysis of a protein or nucleic acid, wherein the slab gel for electrophoresis comprises a support filled with an aqueous gel prepared by polymerizing an aqueous solution comprising a radically polymerizable monomer, a crosslinkable monomer, a buffer, a redox polymerization initiator, and a photosensitizer and having a pH level of 6.0 to 7.5 via light application with the use of a buffer for electrophoresis containing tris(hydroxymethyl)aminomethane and glycine.

16. A method for using of a slab gel for electrophoresis according to claim 15, wherein the buffer for electrophoresis contains dodecyl sulfate.
